# FASCICULE DE BREVET EUROPEEN

(11) **EP 3 637 207 B1**
(45) Date de publication et mention de la délivrance du brevet: **25.05.2022**
(21) Numéro de dépôt: 19201812.5
(22) Date de dépôt: 08.10.2019
(51) Int. Cl.: G05B 19/042, G05D 1/00, G05B 9/00

(54) **SYSTÈME DE GÉNÉRATION DE COMMANDES D'UN SYSTÈME COMMANDÉ VIA UNE INTERFACE GRAPHIQUE ET PROCÉDÉ ASSOCIÉ**
STEUERUNGSSYSTEM EINES ÜBER EINE GRAPHISCHE SCHNITTSTELLE GESTEUERTEN SYSTEMS, UND ENTSPRECHENDES VERFAHREN
SYSTEM FOR GENERATING COMMANDS TO THE CONTROL UNIT OF A SYSTEM CONTROLLED VIA A GRAPHIC USER INTERFACE AND ASSOCIATED METHOD

(30) Priorité: 09.10.2018 FR 1801068
(43) Date de publication de la demande: 15.04.2020
(73) Titulaire: Thales, 92400 Courbevoie (FR)
(72) Inventeur: URBANSKI, Guillaume, 33700 Merignac (FR); CORDONNIER, Alain, 33700 Merignac (FR); MISSON, Hélène, 33700 Merignac (FR); LAPUYADE, Sylvain, 33700 Merignac (FR); CAILLAUD, Maxime, 33700 Merignac (FR)
(74) Mandataire: Lavoix

(56) Documents cités:
- US-A1- 2009 037 033
- US-A1- 2017 291 691
- FAYOLLAS C ET AL: "A Software-Implemented Fault-Tolerance Approach for Control and Display Systems in Avionics", 2014 IEEE 20TH PACIFIC RIM INTERNATIONAL SYMPOSIUM ON DEPENDABLE COMPUTING, IEEE, 18 novembre 2014 (2014-11-18), pages 21-30, XP032696951, DOI: 10.1109/PRDC.2014.11 [extrait le 2014-12-03]
- CAMILLE FAYOLLAS ET AL: "Interactive cockpits as critical applications: a model-based and a fault-tolerant approach", INTERNATIONAL JOURNAL OF CRITICAL COMPUTER-BASED SYSTEMS, vol. 4, no. 3, 22 décembre 2013 (2013-12-22), page 202, XP055641245, ISSN: 1757-8779, DOI: 10.1504/IJCCBS.2013.058407

## Description

La présente invention concerne un système de contrôle de commande d'un système commandé via une interface graphique.

La présente invention concerne également un procédé de contrôle associé à ce système de contrôle.

L'invention est applicable dans tout domaine technique dont le besoin est d'élaborer une commande via une interface homme-machine graphique tout en garantissant un objectif de sureté de fonctionnement élevé. Ainsi, l'invention reste applicable notamment dans le domaine avionique, spatial, médical ou nucléaire.

Il est connu dans l'état de la technique, différentes méthodes d'élaboration des commandes permettant de contrôler le fonctionnement d'un système dans un environnement critique tout en garantissant un niveau d'intégrité élevé de ces commandes.

Ainsi, par exemple, dans le domaine avionique, dans un porteur de type avion ou hélicoptère, les commandes des systèmes avioniques sont généralement réalisées par des dispositifs de contrôle physiques tels que par exemple des boutons, rotacteurs, interrupteurs, etc.

Le document US 2009/037033 A1 décrit un système de contrôle de commande d'un système commandé via une interface graphique, les documents FAYOLLAS C ET AL: "A Software-Implemented Fault-Tolerance Approach for Control and Display Systems in Avionics" et C. FAYOLLAS ET AL: "Interactive cockpits as critical applications: a modelbased and a fault-tolerant approach" décrivent un logiciel de contrôle d'un système commandé et le document US 2017/291691 A1 un procédé d'assistance lors du vol d'un aéronef.

L'avantage de tels dispositifs de contrôle est que chacun d'entre eux est indépendant physiquement des autres. Ainsi, la défaillance de l'un d'entre eux n'a qu'une faible conséquence sur la sureté de fonctionnement du porteur et reste circonscrite à une partie du sous-système commandé.

Toutefois, une solution à base de dispositifs de contrôle physiques trouve ses limites en termes d'ergonomie, d'évolution, d'encombrement et de coûts.

En particulier, en ce qui concerne l'ergonomie, le grand nombre de systèmes à commander par exemple dans un aéronef rendent le panneau plafond du cockpit particulièrement chargé, engendrant de fait de la complexité. Cette complexité peut se traduire dans des moments de stress par des erreurs d'utilisation de ces dispositifs et donc, des erreurs de commandes. De plus, souvent, ces dispositifs de contrôle se trouvent hors de la zone de visualisation normale du pilote ce qui n'est ni optimal en terme de charge de travail ni optimal en terme de perception du travail.

En ce qui concerne l'évolution, les dispositifs de contrôle physiques limitent l'automatisation ou l'exécution de commandes par un autre système.

Une solution pour simplifier le contrôle de différents systèmes consiste donc à remplacer les dispositifs de contrôle physiques par une interface homme-machine affichée par exemple sur un écran avionique. Cette opération de transformation des dispositifs de contrôle physiques en différents types d'interacteurs graphiques disponibles sur un écran est appelée virtualisation.

La difficulté de la virtualisation des dispositifs de contrôle tient au niveau de sureté de fonctionnement (« safety » dans la terminologie anglo-saxonne) que ceux-ci doivent satisfaire. Un équipement qui enverrait des commandes erronées vers des systèmes commandés, par exemple une coupure de l'ensemble des vannes d'alimentation en carburant au décollage d'un aéronef, aurait des conséquences préjudiciables pour la sureté du vol. Le système générant la commande doit donc être pensé pour prévenir les dysfonctionnements et confiner les conséquences d'une éventuelle panne.

Par conséquent, actuellement, la virtualisation est effectuée pour des dispositifs de contrôle dont des commandes erronées, perdues ou intempestives n'ont pas de conséquences graves sur l'environnement dans lequel fonctionnent les systèmes commandés.

Ainsi, par exemple, dans le domaine avionique, la virtualisation est utilisée pour des dispositifs de contrôle dont les commandes erronées, perdues ou intempestives conduisent à un évènement au plus de type « MAJOR » (« majeur » en français) au sens de la réglementation CS 25.1309. En particulier, conformément à cette réglementation, un évènement de type « MAJOR » ne doit entrainer au plus qu'une surcharge de travail pour l'équipage et de l'inconfort pour les passagers.

La présente invention a pour but de proposer un moyen de contrôle qui permet de conserver les avantages d'une interface graphique de commande d'un système tout en garantissant un niveau de sureté de fonctionnement élevé.

Notamment, pour le domaine avionique, le système de contrôle selon l'invention permet de garantir le niveau d'intégrité « HAZARDOUS » (« dangereux » en français) et si besoin, « CATASTROPHIC » (« catastrophique » en français) des commandes générées.

À cet effet, l'invention a pour objet un système de contrôle conforme à la revendication 1.

Suivant d'autres aspects avantageux de l'invention, le système de contrôle comprend une ou plusieurs des caractéristiques des revendications 2 à 10, prise(s) isolément ou suivant toutes les combinaisons techniquement possibles.

L'invention a également pour objet un procédé de contrôle conforme à la revendication 11.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique illustrant un système de contrôle selon un exemple de réalisation de l'invention;
- la figure 2 est une vue schématique illustrant le fonctionnement du système de contrôle de la figure 1;
- la figure 3 est un organigramme d'un procédé de contrôle selon l'invention, le procédé de contrôle étant mis en œuvre par le système de contrôle de la figure 1; et
- la figure 4 est une vue schématique d'un système commandé par des commandes contrôlées par le système de contrôle de la figure 1.

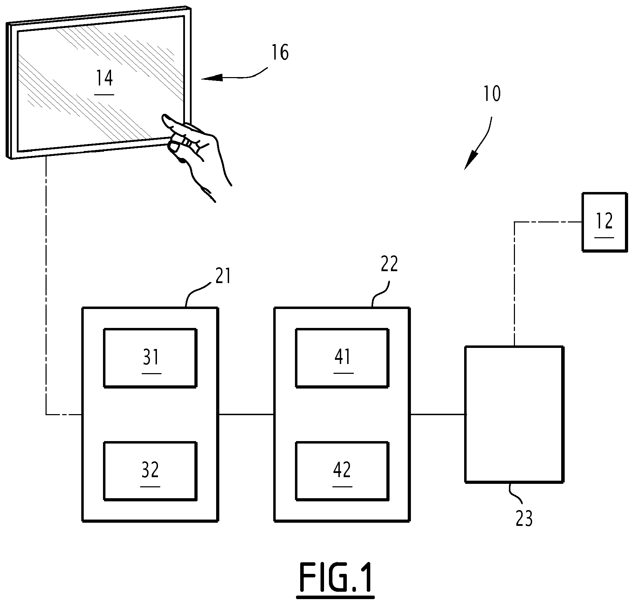

Le système de contrôle 10 de la figure 1 permet de contrôler des commandes destinées à un système commandé 12.

Dans l'exemple décrit ci-dessous, le système commandé 12 est un système embarqué à bord d'un aéronef et présentant par exemple un système d'alimentation en carburant des moteurs de l'aéronef. Ce système est connu en soi et comprend notamment une pluralité de pompes faisant circuler du carburant vers les moteurs.

L'aéronef est pilotable par un pilote à partir d'un cockpit disposé à l'intérieur de celui-ci (cas notamment d'un avion et d'un hélicoptère) ou à partir d'un cockpit distant (cas notamment d'un drone).

Dans le cas général, il doit être toutefois compris que le système de contrôle 10 permet de contrôler des commandes destinées à tout autre système commandé garantissant un objectif de sureté de fonctionnement élevé et fonctionnant dans tout autre environnement critique.

Ainsi, par exemple, selon d'autres exemples de réalisation de l'invention, l'environnement critique présente un engin spatial, un véhicule terrestre (notamment un véhicule ferroviaire), un dispositif médical, une installation nucléaire, etc.

En outre, dans l'exemple décrit ci-dessous, pour des raisons de simplicité, le système de contrôle 10 permet de contrôler des commandes destinées à un seul système commandé. Toutefois, dans le cas général, il doit être compris que le système de contrôle 10 permet de contrôler des commandes destinées à plusieurs systèmes commandées.

Comme cela est illustré sur la figure 1, le système commandé 12 est commandé par le pilote via une interface graphique 14. Ainsi, les commandes destinées au système commandé 12 sont au moins partiellement virtualisées.

L'interface graphique 14 est par exemple affichée sur un écran d'affichage 16 disposé dans le cockpit de l'aéronef. Cet écran 16 correspond à l'un des écrans déjà existants dans le cockpit ou alors à un écran spécialement conçu pour commander un ou plusieurs systèmes embarqués.

Le pilote interagit avec l'interface graphique 14 au moyen d'un ou de plusieurs dispositifs d'interaction.

Dans l'exemple décrit, ces dispositifs d'interaction sont présentés par une souris (ou tout autre dispositif de pointage) et un dispositif de détection de mouvements tactiles sur l'écran 16. Autrement dit, dans l'exemple décrit, l'écran 16 est un écran tactile.

Les dispositifs d'interaction sont aptes à générer des données d'interaction suite à chaque interaction exercée par le pilote en relation avec l'interface graphique 14. Ces données d'interaction décrivent alors les interactions exercées par le pilote.

En référence à la figure 1, le système de contrôle 10 selon l'invention comprend un premier sous-système de contrôle 21, un deuxième sous-système de contrôle 22 et un troisième sous-système de contrôle 23.

Le premier sous-système de contrôle 21 comprend un premier module de calcul 31 apte à acquérir les données d'interaction générées par les dispositifs d'interaction, à associer à ces données d'interaction une commande et à générer un signal de commande correspondant à cette commande.

Le premier module de calcul 31 est par exemple intégré dans un calculateur graphique mettant en œuvre le fonctionnement de l'interface graphique 14. Ainsi, le premier module de calcul 31 se présente au moins partiellement sous la forme d'un logiciel mis en œuvre par ce calculateur et/ou d'un circuit logique programmable de type FPGA (de l'anglais « field-programmable gate array »).

Dans l'exemple de la figure 1, le premier sous-système de contrôle 21 comprend en outre un deuxième module de calcul 32 permettant d'élaborer un autre signal de commande à partir des mêmes données d'interaction à des fins de comparaison dans le deuxième sous-système de contrôle 22 avec celui élaboré par le premier module de calcul 31.

En particulier, tout comme le premier module de calcul 31, le deuxième module de calcul 32, est apte à acquérir les données d'interaction issues générées par les dispositifs d'interaction, à associer à ces données d'interaction une commande et à générer un signal de commande correspondant à cette interaction.

Le deuxième module de calcul 32 est intégré dans un calculateur indépendant de celui du premier module de calcul 31. Comme dans le cas précédent, ce deuxième module de calcul 32 se présente au moins partiellement sous la forme d'un logiciel et/ou d'un circuit logique programmable de type FPGA.

En référence à la figure 1, le deuxième sous-système de contrôle 22 comprend un premier module de calcul 41 apte à acquérir l'ensemble des signaux de commande issus du premier sous-système de contrôle 21, à analyser ces signaux et lorsqu'ils correspondent à une même commande, à vérifier la compatibilité de cette commande avec le contexte opérationnel de l'aéronef.

Le premier module de calcul 41 est intégré dans un calculateur indépendant de chacun des calculateurs utilisables par le premier sous-système de contrôle 21 et se présente par exemple sous la forme d'un logiciel ou/et d'un circuit logique programmable de type FPGA.

Le contexte opérationnel de l'aéronef est défini par une pluralité de paramètres représentant la phase de vol courante de l'aéronef et les états de fonctionnement de l'ensemble des systèmes embarqués dans celui-ci. Chaque état peut par exemple correspondre à un état de fonctionnement normal, un état de fonctionnement dégradé ou un état défaillant.

Le contexte opérationnel de l'aéronef peut être défini en outre par tout autre paramètre affectant les composantes de l'aéronef et/ou son pilotage.

Ainsi, par exemple, ces paramètres peuvent dépendre des conditions météorologiques courantes et/ou futures aux environs de l'aéronef, du carburant restant, de la destination, du temps de vol jusqu'à la destination, de la procédure d'approche, etc.

La vérification de la commande correspondante avec le contexte opérationnel de l'aéronef est effectuée par exemple en utilisant une base de données mémorisée dans le calculateur intégrant le premier module de calcul 41.

Cette base de données contient par exemple une liste de commandes autorisées (ou non-autorisées) en fonction de la valeur et de la combinatoire possible de chaque paramètre composant le contexte opérationnel de l'aéronef.

Ainsi, lorsque la commande correspondante se trouve (ou ne se trouve pas) dans une telle liste, le premier module de calcul 41 est apte à autoriser la commande et à générer un signal de confirmation de la commande correspondant à cette commande. Dans le cas contraire, il est apte à interdire cette commande par un signal d'interdiction.

De manière générale, pour l'application avionique, le premier module de calcul 41 est apte à interdire toute commande ou un groupe de commandes conduisant à un évènement de type « HAZARDOUS » ou « CATASTROPHIC » dans le contexte opérationnel courant de l'aéronef.

Avantageusement, et comme cela est illustré sur la figure 1, le deuxième sous-système de contrôle 22 comprend en outre un deuxième module de calcul 42.

Ce deuxième module de calcul 42 est redondant au premier module de calcul 41 et est donc apte à exécuter les mêmes tâches que ce premier module de calcul 41 en parallèle ou en cas de panne du premier module de calcul 41.

Le deuxième module de calcul 42 est intégré dans un calculateur indépendant de celui du premier module de calcul 41 et comme dans le cas précédent, se présente sous la forme d'un logiciel et/ou d'un circuit logique programmable de type FPGA.

Comme dans le cas précédent, le deuxième module de calcul 42 est notamment apte à générer un signal de confirmation de la commande lorsque la commande correspondante est compatible avec le contexte opérationnel de l'aéronef.

Le troisième sous-système de contrôle 23 est apte à acquérir les signaux de confirmation issus du premier et du deuxième modules de calcul 41, 42 du deuxième sous-système de contrôle 22 et à sélectionner l'un de ces signaux.

Selon un exemple de réalisation, le troisième sous-système de contrôle 23 est apte à sélectionner un signal de confirmation selon un « OU » logique, c'est-à-dire l'un ou l'autre des signaux de confirmation de la commande issus du deuxième sous-système de contrôle 22.

Le troisième sous-système de contrôle 23 est apte en outre à acquérir le signal de commande issu par exemple du premier module de calcul 31 du premier sous-système de contrôle 21, et à consolider ce signal de commande avec le signal de confirmation sélectionné.

La consolidation s'effectue par exemple selon un « ET » logique, c'est-à-dire lorsque le signal de commande et le signal de confirmation sélectionné correspondent à une même commande, la consolidation est effectuée et le troisième sous-système de contrôle 23 est apte à générer un signal de commande résultant.

Ce signal de commande résultant est alors destiné au système commandé 12.

Par ailleurs, lorsque le deuxième sous-système de contrôle 22 est en panne, c'est-à-dire lorsque le système 10 est en mode de fonctionnement dégradé, le troisième sous-système de contrôle 23 est apte à exécuter la commande correspondant au signal de commande sans consolidation, c'est-à-dire sans utilisation du signal de confirmation.

Le troisième sous-système de contrôle 23 est par exemple intégré dans un calculateur mettant en œuvre le fonctionnement du système commandé 12. Il se présente ainsi sous la forme d'un logiciel exécutable par ce calculateur et/ou d'un circuit logique programmable de type FPGA.

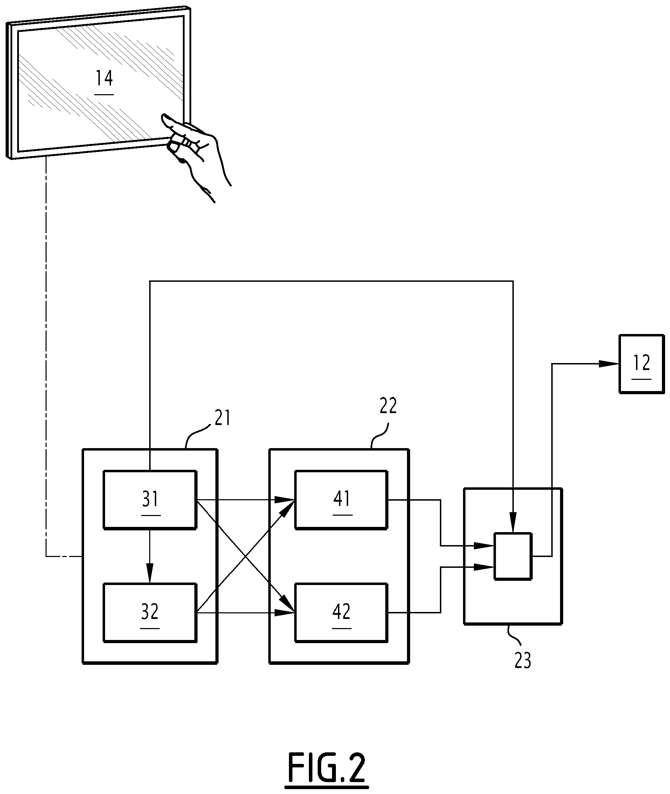

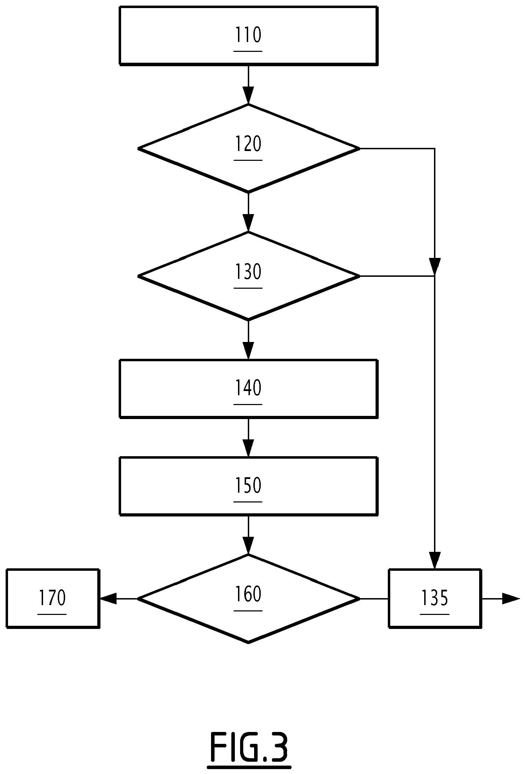

Le procédé de contrôle de commande du système commandé 12 sera désormais expliqué en référence à la figure 2 illustrant de manière schématique le fonctionnement du système de contrôle 10 et à la figure 3 illustrant un organigramme de ce procédé.

Initialement, le pilote interagit avec l'interface graphique 14 afin de commander le système 12.

Les dispositifs d'interaction correspondants génèrent alors des données d'interaction relatives à cette interaction.

Par ailleurs, le contexte opérationnel courant de l'aéronef est déterminé par exemple par des systèmes de surveillance correspondants et est acquis par le deuxième sous-système de contrôle 22.

Lors de l'étape initiale du procédé de contrôle 110, les modules de calcul 31 et 32, acquièrent les données d'interaction issues des dispositifs d'interaction correspondants. Par ailleurs, lorsque le premier module de calcul 31 est intégré dans le calculateur graphique mettant en œuvre le fonctionnement de l'interface graphique 14, le deuxième module 32 acquiert du module 31 le contexte d'affichage de l'interface graphique 14 pour interpréter les données d'interaction acquises. Dans le cas contraire, les deux modules acquiert ce contexte d'un module externe mettant en œuvre le fonctionnement de l'interface graphique 14.

Puis, les deux modules 31, 32 mettent en œuvre en parallèle et de manière indépendante l'un de l'autre une première et une deuxième sous-étapes décrites ci-dessous.

Lors de la première sous-étape, les modules 31, 32 associent aux données d'interaction une commande.

Ainsi, lorsque ces données décrivent un mouvement tactile sur l'écran 16, les modules 31, 32 analysent ce mouvement en concordance avec l'interface graphique 14. Par exemple, lorsque l'interface graphique 14 présente une pluralité d'interrupteurs affichés dans des endroits prédéterminés, les modules 31, 32 analysent la position du mouvement tactile et l'associent à l'un des interrupteurs.

Par ailleurs, par exemple pour associer une commande de type « OFF » ou « ON » à cet interrupteur, les modules analysent la trajectoire du mouvement tactile.

Selon un exemple de réalisation, pour que la commande correspondante soit associée à ce mouvement, sa trajectoire doit avoir une forme particulière comme par exemple cela est décrit dans le document WO 2017/167698 A1.

Si une commande a pu être associée aux données d'interaction correspondantes, les modules 31, 32 passent à l'exécution de la deuxième sous-étape.

Lors de la deuxième sous-étape, chacun des modules de calcul 31, 32 génère un signal de commande correspondant à la commande associée et le transmet au deuxième sous-système de contrôle 22.

Lors de l'étape 120 suivante, chacun des modules de calcul 41, 42 du deuxième sous-système de contrôle 22 acquiert les deux signaux de commande générés par le premier sous-système de contrôle 21.

Puis, chacun des modules de calcul 41, 42 analyse ces signaux et lorsqu'ils correspondent à une même commande, passe à l'exécution de l'étape 130 suivante. Dans le cas contraire, un signal d'interdiction de la commande est généré et la commande est rejetée lors de l'étape 135.

Lors de l'étape 130, chacun des modules de calcul 41, 42 vérifie la compatibilité de la commande avec le contexte opérationnel de l'aéronef comme cela a été expliqué ci-dessus.

Lorsque la commande est compatible, les modules 41, 42 passent à l'étape 140 suivante. Dans le cas contraire, la commande est rejetée lors de l'étape 135.

Lors de l'étape 140, chacun des modules 41, 42 génère un signal de confirmation correspondant alors à la commande compatible avec le contexte opérationnel.

Puis, chacun des modules 41, 42 transmet le signal de confirmation au troisième sous-système de contrôle 23.

Il est à noter que lorsque lors de l'exécution des étapes 120 à 140, si l'un des modules de calcul 41, 42 n'est pas disponible suite à une panne par exemple, un seul signal de confirmation est transmis au troisième sous-système de contrôle 23.

Il est à noter également que lorsqu'aucun des modules de calcul 41, 42, du deuxième sous-système de contrôle 22 n'est disponible, le système de contrôle 10 passe en mode de fonctionnement dégradé et la commande correspondant au signal de commande est exécutée par le troisième sous-système de contrôle 23 sans consolidation avec un signal de confirmation.

Lors de l'étape 150 suivante, le troisième sous-système de contrôle 23 acquiert au moins l'un des signaux de confirmation.

Lorsque ce sous-système 23 acquiert les deux signaux de confirmation, il sélectionne l'un des deux, par exemple celui issu du premier module de calcul 41.

Puis, le troisième sous-système de contrôle 23 acquiert le signal de contrôle issu par exemple du premier module de calcul 31 du premier sous-système de contrôle 21.

Si le premier module de calcul 31 n'est pas disponible, le troisième sous-système de contrôle 23 acquiert le signal de contrôle issu du ou de l'un des deuxièmes modules de calcul du premier sous-système de contrôle 21.

Lors de l'étape 160, le troisième sous-système de contrôle 23 consolide le signal de commande et le signal de confirmation sélectionné, en faisant par exemple un « ET » logique comme cela a été expliqué précédemment.

Ainsi, lorsque les deux signaux correspondent à une même commande, le troisième sous-système de contrôle transmet cette commande pour exécution au système 12 lors de l'étape 170.

Dans le cas contraire, la commande est rejetée lors de l'étape 135.

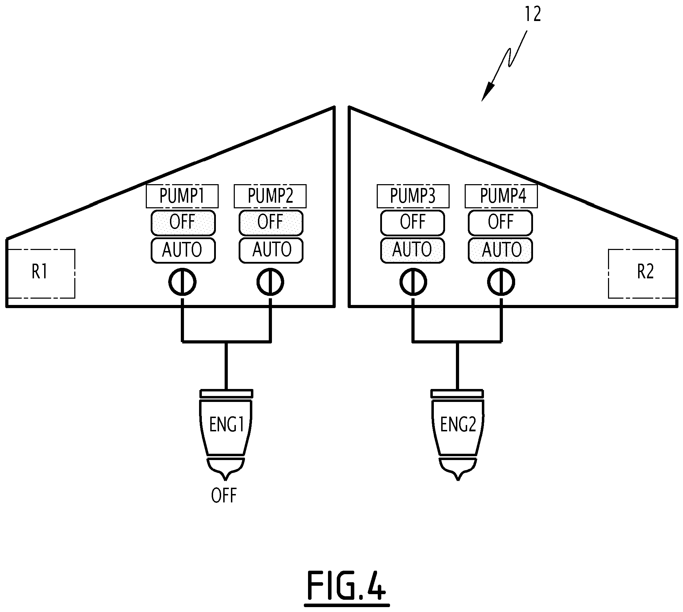

La figure 4 illustre la mise en œuvre du procédé de contrôle d'une commande donnée par le pilote au système 12 correspondant à un système d'alimentation en carburant des moteurs de l'aéronef.

Ainsi, comme cela est connu en soi, pour un aéronef bimoteur, un tel système 12 comprend par exemple quatre pompes, un couple de pompes étant associé à chaque moteur. Sur la figure 4, les moteurs sont désignés par les références « ENG1 » et « ENG2 » et les pompes sont désignées par les références « PUMP1 » à « PUMP4 ».

Chaque pompe « PUMP1 » à « PUMP4 » est apte à fonctionner en régime « AUTO » dans lequel elle alimente le moteur correspondant à partir de l'un des réservoirs R1 ou R2, ou en régime « OFF » dans lequel elle est éteinte.

Dans l'exemple représenté sur la figure 4, l'aéronef se trouve en décollage avec une panne ou un feu du moteur ENG1. Les pompes « PUMP1 » et « PUMP2 » sont donc en régime OFF. Cela définit un contexte opérationnel de l'aéronef.

Il est supposé en outre que la commande associée par le premier sous-système de contrôle 21 suite à une interaction du pilote avec l'interface graphique 14 consiste à éteindre les pompes PUMP3 et PUMP4, c'est-à-dire à les mettre en régime « OFF ».

Cette commande sera rejetée lors de l'étape 135 du procédé décrit ci-dessus suite à la vérification de sa compatibilité avec le contexte opérationnel de l'aéronef lors de l'étape 130.

En effet, la coupure des pompes PUMP3 et PUMP4 conduirait à la perte du moteur « ENG2 » restant au décollage ce qui conduirait à la perte de l'aéronef, c'est-à-dire à un évènement de type « CATASTROPHIC ». La commande n'est donc pas compatible avec le contexte opérationnel courant et est rejetée.

On conçoit alors que la présente invention présente un certain nombre d'avantages.

Tout d'abord, l'invention permet de commander un système via une interface graphique tout en garantissant un niveau de sureté de fonctionnement très élevé.

Ainsi, pour le domaine avionique, lorsqu'une commande réalisée à l'aide d'un média d'interaction possède un niveau d'intégrité « HAZARDOUS » ou « CATASTROPHIC », l'invention permet de garder ce niveau durant le traitement de cette commande jusqu'au système auquel elle est destinée.

Ceci rend alors possible l'utilisation d'une interface graphique pour commander chaque système embarqué et permet de virtualiser ces commandes sous la forme appropriée.

En outre, une haute disponibilité du système de contrôle selon l'invention peut être atteinte en adaptant le nombre de calculateurs utilisés pour mettre en œuvre le fonctionnement du premier et du deuxième sous-systèmes de contrôle.

Cette commande sera rejetée lors de l'étape 135 du procédé décrit ci-dessus suite à la vérification de sa compatibilité avec le contexte opérationnel de l'aéronef lors de l'étape 130.

En effet, la coupure des pompes PUMP3 et PUMP4 conduirait à la perte du moteur « ENG2 » restant au décollage ce qui conduirait à la perte de l'aéronef, c'est-à-dire à un évènement de type « CATASTROPHIC ». La commande n'est donc pas compatible avec le contexte opérationnel courant et est rejetée.

On conçoit alors que la présente invention présente un certain nombre d'avantages.

Tout d'abord, l'invention permet de commander un système via une interface graphique tout en garantissant un niveau de sureté de fonctionnement très élevé.

Ainsi, pour le domaine avionique, lorsqu'une commande réalisée à l'aide d'un média d'interaction possède un niveau d'intégrité « HAZARDOUS » ou « CATASTROPHIC », l'invention permet de garder ce niveau durant le traitement de cette commande jusqu'au système auquel elle est destinée.

Ceci rend alors possible l'utilisation d'une interface graphique pour commander chaque système embarqué et permet de virtualiser ces commandes sous la forme appropriée.

En outre, une haute disponibilité du système de contrôle selon l'invention peut être atteinte en adaptant le nombre de calculateurs utilisés pour mettre en œuvre le fonctionnement du premier et du deuxième sous-systèmes de contrôle.

## Revendications

1. Système de contrôle (10) de commande d'un système commandé (12) via une interface graphique (14) par un opérateur, le système commandé (12) fonctionnant dans un environnement critique, le système de contrôle (10) comprenant :
- un premier sous-système de contrôle (21) comprenant un premier module de calcul (31) apte à acquérir des données d'interaction décrivant les interactions de l'opérateur en relation avec l'interface graphique (14), à associer à ces données d'interaction une commande et à générer un signal de commande correspondant à cette commande;
- un deuxième sous-système de contrôle (22) comprenant un premier module de calcul (41) apte à acquérir le signal de commande, à vérifier la compatibilité de la commande correspondant au signal de commande avec un contexte opérationnel définissant le fonctionnement de l'environnement critique et lorsque la commande est compatible avec le contexte opérationnel, à générer un signal de confirmation correspondant à cette commande; et
- un troisième sous-système de contrôle (23) apte à acquérir le signal de commande et le signal de confirmation, et à consolider ces signaux pour générer un signal de commande résultant destiné à commander le système commandé (12), **caractérisé en ce que** le premier sous-système de contrôle (21) comprend en outre un ou plusieurs deuxièmes modules de calcul (32), le ou chaque deuxième module de calcul (32) étant apte à acquérir les dites données d'interaction, à associer à ces données d'interaction une commande et à générer un autre signal de commande correspondant à cette commande ; et **en ce que**
le premier module de calcul (41) du deuxième sous-système de contrôle (22) est apte à acquérir l'ensemble des signaux de commande générés par le premier sous-système de contrôle (21) et lorsque ces signaux de commande correspondent à une même commande, à vérifier la compatibilité de cette commande avec le contexte opérationnel.

2. Système de contrôle (10) selon la revendication 1, dans lequel le deuxième sous-système de contrôle (22) comprend en outre un deuxième module de calcul (42) indépendant du premier module de calcul (41) et apte à exécuter les mêmes tâches que le premier module de calcul (41) de ce deuxième sous-système de contrôle (22), le deuxième module de calcul (42) du deuxième sous-système de contrôle (22) étant alors apte à générer un autre signal de confirmation.

3. Système de contrôle (10) selon la revendication 2, dans lequel le troisième sous-système de contrôle (23) est apte à acquérir l'ensemble des signaux de confirmation issus du deuxième sous-système de contrôle (22) et à sélectionner l'un de ces signaux de confirmation pour le consolider avec le signal de commande.

4. Système de contrôle (10) selon l'une quelconque des revendications précédentes, dans lequel le troisième sous-système de contrôle (23) est apte à générer le signal de commande résultant lorsque le signal de commande et le signal de confirmation à consolider correspondent à une même commande.

5. Système de contrôle (10) selon l'une quelconque des revendications précédentes, dans lequel, en cas de défaillance du deuxième sous-système de contrôle (22), le troisième sous-système de contrôle (23) est apte à générer le signal de commande résultant à partir du signal de commande acquis, sans consolidation avec un signal de confirmation.

6. Système de contrôle (10) selon l'une quelconque des revendications précédentes, dans lequel le premier module de calcul (31) du premier sous-système de contrôle (21) est intégré dans un calculateur mettant en œuvre le fonctionnement de l'interface graphique (14).

7. Système de contrôle (10) selon l'une quelconque des revendications précédentes, dans lequel le troisième sous-système de contrôle (23) est intégré dans le système commandé (12).

8. Système de contrôle (10) selon l'une quelconque des revendications précédentes, dans lequel au moins une interaction de l'opérateur en relation avec l'interface graphique (14) est réalisée sur un écran (16) affichant cette interface graphique (14).

9. Système de contrôle (10) selon l'une quelconque des revendications précédentes, dans lequel le système commandé (12) est un système embarqué à bord d'un aéronef.

10. Système de contrôle (10) selon la revendication 9, dans lequel le contexte opérationnel est défini en fonction de la phase de vol de l'aéronef et des états de fonctionnement des systèmes embarqués.

11. Procédé de contrôle de commande d'un système commandé (12) via une interface graphique (14) par un opérateur, le système commandé fonctionnant dans un environnement critique, le procédé de contrôle étant mis en œuvre par un système de contrôle (10) de commande selon l'une quelconque des revendications précédentes et comprenant :
- acquisition (110) de données d'interaction décrivant chaque interaction de l'opérateur avec l'interface graphique (14), association à ces données d'interaction d'une commande et génération d'un signal de commande correspondant à cette commande;
- vérification (130) de la compatibilité de la commande correspondant au signal de commande avec un contexte opérationnel définissant le fonctionnement de l'environnement critique;
- lorsque la commande est compatible avec le contexte opérationnel, génération (140) d'un signal de confirmation correspondant à cette commande; et
- consolidation (160) du signal de commande et du signal de confirmation pour générer un signal de commande résultant destiné à commander le système commandé.

## Patentansprüche

1. Steuerungssystem (10) zum Steuern eines gesteuerten Systems (12) über eine grafische Benutzeroberfläche (14) durch einen Bediener, wobei das gesteuerte System (12) in einer kritischen Umgebung betrieben wird, das Steuerungssystem (10) umfassend:
- ein erstes Steuerungsuntersystem (21), umfassend ein erstes Rechnenmodul (31), das in der Lage ist, Interaktionsdaten zu erfassen, die Interaktionen des Bedieners in Verbindung mit der grafischen Benutzeroberfläche (14) beschreiben, diese Interaktionsdaten mit einem Befehl zu assoziieren und ein Befehlssignal zu erzeugen, das diesem Befehl entspricht;
- ein zweites Steuerungsuntersystem (22), umfassend ein erstes Rechnenmodul (41), das in der Lage ist, das Befehlssignal zu erfassen, um die Kompatibilität des Befehls, der dem Befehlssignal entspricht, mit einem Betriebskontext, der die Funktion der kritischen Umgebung definiert, zu überprüfen und, wenn der Befehl mit dem Betriebskontext kompatibel ist, ein Bestätigungssignal zu erzeugen, das diesem Befehl entspricht; und
- ein drittes Steuerungsuntersystem (23), das in der Lage ist, das Befehlssignal und das Bestätigungssignal zu erfassen und um diese Signale zu konsolidieren, um ein resultierendes Befehlssignal zu erzeugen, das dazu bestimmt ist, das gesteuerte Systems (12) zu steuern,
**dadurch gekennzeichnet, dass** das erste Steuerungsuntersystem (21) ferner ein oder mehrere zweite Berechnungsmodule (32) umfasst, wobei das oder jedes zweite Berechnungsmodul (32) in der Lage ist, die Interaktionsdaten zu erfassen, mit diesen Interaktionsdaten einen Befehl zu assoziieren und ein weiteres Befehlssignal zu erzeugen, das diesem Befehl entspricht; und dass
das erste Rechnenmodul (41) des zweiten Steuerungsuntersystems (22) in der Lage ist, die Gesamtheit der Befehlssignale zu erfassen, die von dem ersten Steuerungsuntersystem (21) erzeugt werden und, wenn diese Befehlssignale demselben Befehl entsprechen, die Kompatibilität dieses Befehls mit dem Betriebskontext zu überprüfen.

2. Steuerungssystem (10) nach Anspruch 1, wobei das zweite Steuerungsuntersystem (22) ferner ein zweites Rechnenmodul (42) umfasst, das von dem ersten Rechnenmodul (41) unabhängig und in der Lage ist, die gleichen Aufgaben wie das erste Rechnenmodul (41) dieses zweiten Steuerungsuntersystems (22) auszuführen, wobei das zweite Rechnenmodul (42) des zweiten Steuerungsuntersystems (22) dann in der Lage ist, ein weiteres Bestätigungssignal zu erzeugen.

3. Steuerungssystem (10) nach Anspruch 2, wobei das dritte Steuerungsuntersystem (23) in der Lage ist, alle Bestätigungssignale aus dem zweiten Steuerungsuntersystem (22) zu erfassen und eines dieser Bestätigungssignale auszuwählen, um es mit dem Befehlssignal zu konsolidieren.

4. Steuerungssystem (10) nach einem der vorherigen Ansprüche, wobei das dritte Steuerungsuntersystem (23) in der Lage ist, das resultierende Befehlssignal zu erzeugen, wenn das Befehlssignal und das zu konsolidierende Bestätigungssignal demselben Befehl entsprechen.

5. Steuerungssystem (10) nach einem der vorherigen Ansprüche, wobei im Fall eines Ausfalls des zweiten Steuerungsuntersystems (22) das dritte Steuerungsuntersystem (23) in der Lage ist, das resultierende Befehlssignal aus dem erfassten Befehlssignal zu erzeugen, ohne Konsolidierung mit einem Bestätigungssignal.

6. Steuerungssystem (10) nach einem der vorherigen Ansprüche, wobei das erste Rechnenmodul (31) des ersten Steuerungsuntersystems (21) in einen Rechner integriert ist, der den Betrieb der grafischen Benutzeroberfläche (14) implementiert.

7. Steuerungssystem (10) nach einem der vorherigen Ansprüche, wobei das dritte Steuerungsuntersystem (23) in das gesteuerte System (12) integriert ist.

8. Steuerungssystem (10) nach einem der vorherigen Ansprüche, wobei mindestens eine Bedienerinteraktion in Verbindung mit der grafischen Benutzeroberfläche (14) auf einem Bildschirm (16) erfolgt, der diese grafische Benutzeroberfläche (14) anzeigt.

9. Steuerungssystem (10) nach einem der vorherigen Ansprüche, wobei das gesteuerte System (12) ein System an Bord eines Flugzeugs ist.

10. Steuerungssystem (10) nach Anspruch 9, wobei der Betriebskontext abhängig von der Flugphase des Flugzeugs und den Betriebszuständen der Bordsysteme definiert wird.

11. Steuerungsverfahren zum Steuern eines Systems, das über eine grafische Benutzeroberfläche (14) von einem Bediener gesteuert wird (12), wobei das gesteuerte System in einer kritischen Umgebung betrieben wird, wobei das Steuerungsverfahren von einem Steuerungssystem (10) zum Steuern nach einem der vorherigen Ansprüche durchgeführt wird und Folgendes umfasst:
- Erfassen (110) von Interaktionsdaten, die jede Interaktion des Bedieners mit der grafischen Benutzeroberfläche (14) beschreiben, Assoziieren eines Befehls mit diesen Interaktionsdaten und Erzeugen eines Befehlssignals, das diesem Befehl entspricht;
- Überprüfen (130) der Kompatibilität des Befehls, der dem Befehlssignal entspricht, mit einem Betriebskontext, der den Betrieb der kritischen Umgebung definiert;
- wenn der Befehl mit dem Betriebskontext kompatibel ist, Erzeugen (140) eines Bestätigungssignals, das diesem Befehl entspricht; und
- Konsolidieren (160) des Befehlssignals und des Bestätigungssignals, um ein resultierendes Befehlssignal zu erzeugen, das dazu bestimmt ist, das gesteuerte System zu steuern.

## Claims

1. A command control system (10) of a commanded system (12) commanded via a graphic interface (14) by an operator, the commanded system (12) operating in a critical environment, the control system (10) comprising:
- a first control subsystem (21) comprising a first computing module (31) able to acquire interaction data describing the interactions of the operator related to the graphic interface (14), associate these interaction data with a command, and generate a command signal corresponding to this command;
- a second control subsystem (22) comprising a first computing module (41) able to acquire the command signal, verify the compatibility of the command corresponding to the command signal with an operational context defining the operation of the critical environment and, when the command is compatible with the operational context, generate a confirmation signal corresponding to this command; and
- a third control subsystem (23) able to acquire the command signal and the confirmation signal, and to consolidate the signals in order to generate a resultant command signal intended to command the commanded system (12),
**characterized in that** the first control subsystem (21) further comprises one or several second computing modules (32), the or each second computing module (32) being able to acquire said interaction data, associate these interaction data with a command, and generate another command signal corresponding to this command; and **in that**
the first computing module (41) of the second control subsystem (22) is able to acquire all of the command signals generated by the first control subsystem (21), and when these command signals correspond to a same command, to verify the compatibility of this command with the operational context.

2. The control system (10) according to claim 1, wherein the second control subsystem (22) further comprises a second computing module (42) independent of the first computing module (41) and able to execute the same tasks as the first computing module (41) of this second control subsystem (22), the second computing module (42) of the second control subsystem (22) then being able to generate another confirmation signal.

3. The control system (10) according to claim 2, wherein the third control subsystem (23) is able to acquire all of the confirmation signals coming from the second control subsystem (22) and to select one of these confirmation signals to consolidate it with the command signal.

4. The control system (10) according to any one of the preceding claims, wherein the third control subsystem (23) is able to generate the resultant command signal when the command signal and the confirmation signal to be consolidated correspond to a same command.

5. The control system (10) according to any one of the preceding claims, wherein, in case of failure of the second control subsystem (22), the third control subsystem (23) is able to generate the resultant command signal from the acquired command signal, without consolidation with a confirmation signal.

6. The control system (10) according to any one of the preceding claims, wherein the first computing module (31) of the first control subsystem (21) is integrated into a computer implementing the operation of the graphic interface (14).

7. The control system (10) according to any one of the preceding claims, wherein the third control subsystem (23) is integrated in the commanded system (12).

8. The control system (10) according to any one of the preceding claims, wherein at least one interaction of the operator in connection with the graphic interface (14) is done on a screen (16) displaying this graphic interface (14).

9. The control system (10) according to any one of the preceding claims, wherein the commanded system (12) is a system on board an aircraft.

10. The control system (10) according to claim 9, wherein the operational context is defined as a function of the flight phase of the aircraft and operating states of the on board systems.

11. A command control method for a commanded system (12) commanded via a graphic interface (14) by an operator, the commanded system operating in a critical environment, the control method comprising:
- acquiring (110) interaction data describing each interaction of the operator with the graphic interface (14), associating these interaction data with a command and generating a command signal corresponding to this command;
- verifying (130) the compatibility of the command corresponding to the command signal with an operational context defining the operation of the critical environment;
- when the command is compatible with the operational context, generating (140) a confirmation signal corresponding to this command; and
- consolidating (160) the command signal and the confirmation signal in order to generate a resultant command signal intended to command the commanded system.
